Europäisches Patentamt

European Patent Office

Office européen des brevets

(19)

(11) Publication number : **0 386 851 B1**

## (12) EUROPEAN PATENT SPECIFICATION

(45) Date of publication of patent specification :
**24.02.93 Bulletin 93/08**

(21) Application number : **90200535.4**

(22) Date of filing : **06.03.90**

(51) Int. Cl.⁵ : **C10M 107/34,** C10M 111/04,
C09K 5/04, // (C10M111/04,
105:52, 107:34), C10N20:02,
C10N40:30

(54) **Refrigeration lubricants.**

(30) Priority : **09.03.89 GB 8905379**

(43) Date of publication of application :
**12.09.90 Bulletin 90/37**

(45) Publication of the grant of the patent :
**24.02.93 Bulletin 93/08**

(84) Designated Contracting States :
**BE CH DE DK FR GB IT LI NL SE**

(56) References cited :
EP-A- 0 336 171
DE-A- 2 943 446
US-A- 4 755 316

(56) References cited :
**DATABASE WPI, no. 78-75637A, Derwent
Publications Ltd, London, GB;
DATABASE WPIL, no. 82-42572E, Derwent
Publications Ltd, London, GB;
DATABASE WPIL, no. 87-025195, Derwent
Publications Ltd, London, GB;**

(73) Proprietor : **SHELL INTERNATIONALE
RESEARCH MAATSCHAPPIJ B.V.
Carel van Bylandtlaan 30
NL-2596 HR Den Haag (NL)**

(72) Inventor : **Koenders, Peter
Badhuisweg 3
NL-1031 CM Amsterdam (NL)**
Inventor : **Röhler, Jürgen
Hohe Schaar Strasse 36
D-2102 Hamburg 93 (NL)**

EP 0 386 851 B1

## Description

This invention relates to refrigeration lubricants, and more particularly to such lubricants comprising mixtures of hydrofluorocarbons (HFC) and polyoxyalkylene derivatives.

Chlorofluorocarbons (CFC's) are widely used as refrigerants. Owing to the ozone-depletion potential of most common CFCs, global controls on their manufacture and application were agreed under the Montreal Protocol, in September 1987. HFC's, in particular R134a ($CF_3CH_2F$), have been identified as potential alternatives to CFC's.

Refrigeration lubricants are used for compressors in refrigeration systems. The cooling action achieved in most refrigeration systems depends on the cyclic compression/liquefaction and expansion/evaporation of a refrigerant gas in a closed loop system. Prior to liquefaction, the refrigerant is compressed and the compressor must be lubricated. The refrigeration lubricant must be resistant to chemical attack by the gas, free from precipitative materials at low temperatures, able to operate over a wide range of temperatures, and miscible with the liquefied refrigerant.

Research Disclosure 17463, October 1978, by Du Pont, asserts that polyalkylene glycol oils such as those sold by Union Carbide Corporation under the trade names "Ucon" LB-165 and "Ucon" LB-525 can be employed as refrigeration oils in combination with R134a.

US Patent 4,755,316 (US-A-4755316) discloses refrigeration lubricants in which tetrafluoroethane, particularly R134a, is used as refrigerant together with certain polyoxyalkylene glycols as lubricating oils. The polyoxyalkylene glycols are (at least) difunctional with respect to hydroxyl groups, are preferably polyoxypropylene glyocols where the oxypropylene units are at least 80% of the total, and are more preferably polyoxypropylene glycol.

The inventors of US-A-4755316 acknowledge the existence of Research Disclosure 17463 and state (Column 2 lines 35 to 40) that they "have found that the Union Carbide polyalkylene glycol oils" (viz "Ucon" LB-165 and "Ucon" LB-525) "are not fully miscible" (i.e. with R134a) "and in fact would be expected to form two phase mixtures at some locations in refrigeration systems". Those inventors also state (Column 2 lines 41 to 44) their belief that "LB-165 and LB-525 are polyoxypropylene glycols which have a hydroxy group at one end of each molecule and a n-butyl group at the other end".

In Example 2 (Comparative) of US-A-4755316 (Column 8 line 44 to Column 9 line 25) there is set forth (in Table B) comparative data on miscibility of quantities of R134a ranging from 50% to 90%w with various N-butyl polyoxyproplylene glycol hemi-ethers having stated viscosities at 37°C ranging from 62 to 114 centistokes ($mm^2/s$). Many of these hemi-ethers are immiscible at ambient temperature ("room temperature"). In the case of the most favourable hemi-ether, its miscibility with 50%w R134a only extended up to 40°C.

For a refrigeration lubricant, e.g. for use in domestic and commercial refrigerator applications, it is very important that the lubricant and refrigerant components should be completely miscible under all possible operating conditions in order to obviate system malfunctions due to phase separation.

It has now surprisingly been discovered that a particular class of polyoxyalkylene glycol hemi-ethers is miscible with R134a in all proportions from 0.5%w to 99%w hemi-ether over wide temperature ranges, e.g. from -70°C to at least 65°C.

According to the present invention therefore there is provided a refrigeration lubricant comprising a mixture of a hydrofluorocarbon and a polyoxyalkylene glycol hemi-ether of the formula

$$RO-[(EO)_m(PO)_n]-H \qquad (I)$$

wherein EO represents ethyleneoxy, PO represents propyleneoxy, R is $C_{1-6}$ alkyl, and m and n represent average numbers of ethyleneoxy and propyleneoxy moieties in each hemi-ether molecule such that m/(m+n) is in the range 0 to 0.5 and n/(m+n) is in the range 0.5 to 1 and the hemi-ether has viscosity at 40°C (DIN 51 562) in the range 10 to 46mm²/s.

The hydrofluorocarbon may conveniently be a tetrafluoroethane, preferably 1,1,1,2-tetrafluoroethane (R134a)($CF_3CH_2F$).

The viscosity of the hemi-ether at 40°C (DIN 51 562) is preferably in the range 14 to 40 mm²/s, and particularly good miscibility with R134a has been found for hemi-ethers having viscosity at 40°C (DIN 51 562) in the range 14 to 33mm²/s.

Preferably n/(m+n) is at least 0.75, and m is more preferably 0. Preferably (m+n) ranges from 6 to 15.

In order to obtain the desired low viscosity, the molecular weight is preferably as low as is consistent with the other desired properties of the lubricant, i.e. at the low end of the molecular weight range 200 to 2500, e.g. 200 to 1000, preferably 400 to 850. R is preferably $C_{1-4}$ alkyl, e.g. methyl, ethyl or n-butyl.

The invention also provides a process for the preparation of a refrigeration lubricant in accordance with the invention which comprises mixing a hydrofluorocarbon with a polyoxyalkylene glycol hemi-ether of formula I as defined above. The amount of hydrofluorocarbon is preferably in the range 0.5%w to 99%w based on the total of hydrofluorcarbon and hemi-ether.

The hemi-ethers of formula I as defined above are particularly, but not exclusively, suitable for use in domestic and commercial refrigerator applications.

The chosen hemi-ethers have high viscosity indices (VI) and low pour points, combined with a large range of miscibility. The higher the VI value, the lower the viscosity at low temperature, resulting in better oil return from evaporator to compressor. Further, the higher the VI value, the higher the viscosity at high temperatures, resulting in better lubrication at compressor bearings and the piston/cylinder area.

The invention will be further understood from the following illustrative Examples.

## EXAMPLES 1 to 8

Various polyoxyalkylene glycol hemi-ethers were prepared using as initiators n-butanol, methanol and "DOBANOL 25" (trade mark) primary alcohol (a blend of $C_{12-15}$ primary alcohols available from companies of the Royal Dutch/Shell Group), by the following general procedure.

A reactor was flushed with nitrogen and initiator was fed into the reactor. 0.25% Potassium hydroxide flakes (w/w on final product) was added, and the mixture was heated to 115°C. Propylene oxide, or a mixture of propylene oxide and ethylene oxide of specified molar ratio (PO/EO ratio) was then fed into the reactor at a maximum pressure of 5 bar ($5 \times 10^5$ Pa). The total addition/reaction time was 3 to 4 hours. After addition of propylene oxide or propylene oxide/ethylene oxide mixture had ceased, reaction was continued at 120°C for a maximum of a further 3 hours.

For neutralisation, approximately 1 to 1.5% "PURON" (trade mark) ($Na_2H_2P_2O_7$ - disodium pyrophosphate) and 0.75 to 1.0% water (w/w on final product) were added, and the mixture was stirred for 2 hours at 90°C. Volatiles (including water) were removed in vacuo, and the final product was filtered to remove solids, where appropriate with addition of a filter aid to improve filtration.

Compositions and properties of the various polyoxyalkylene glycol hemi-ethers are given in Table I following. In Table I, the viscosities at 40°C and 100°C were determined according to DIN 51 562, viscosity index was determined according to DIN ISO 2909 and pour point was determined according to DIN ISO 3016.

Miscibility of the various hemi-ethers with R134a refrigerant (1,1,1,2-tetrafluoromethane) was determined using a cryostat, a thermostat and glass tubes prepared according to DIN 51 351. Ranges of mixtures of refrigerant and hemi-ether (concentrations determined gravimetrically) containing from 0.5%w to 99%w hemi-ether were prepared in sealed glass tubes and the tubes were completely immersed in the temperature-controlled bath of the thermostat or cryostat. The bath fluid was then heated up or cooled down at a rate of 2°C/minute, and the temperature of phase separation was noted. Results are also given in Table I following.

TABLE 1

| EXAMPLE | INITIATOR | PO/EO RATIO | M.W. (GPC) | VISCOSITY mm$^2$/S DIN 51 562 40°C | VISCOSITY mm$^2$/S DIN 51 562 100°C | VISCOSITY INDEX DIN ISO 2909 | POUR POINT °C DIN ISO 3016 | MISCIBILITY* WITH R 134a °C |
|---|---|---|---|---|---|---|---|---|
| 1 | Butanol | 100/0 | 790 | 33.4 | 7.14 | 185 | -57 | -70 to +72 |
| 2 | Butanol | 50/50 | 765 | 30.0 | 6.83 | 193 | -54 | -70 to +71 |
| 3 | Butanol | 100/0 | 770 | 33.2 | 3.55 | 120 | <-60 | -70 to +100 |
| 4 | Butanol | 50/50 | 410 | 14.8 | 3.80 | 156 | -54 | -70 to +100 |
| 5 | Methanol | 100/0 | 435 | 14.8 | 3.53 | 120 | <-60 | -70 to +100 |
| 6 | Methanol | 50/50 | 445 | 18.4 | 4.91 | 135 | -51 | -70 to +100 |
| 7 | Methanol | 100/0 | 780 | 31.6 | 6.55 | 170 | -57 | -70 to +88 |
| 8 | Methanol | 50/50 | 805 | 39.5 | 9.32 | 230 | -57 | -70 to +65 |
| Comparative A | Butanol | 25/75 | 770 | 32.5 | 7.32 | 201 | -6 | +8 to +62 |
| Comparative B | "DOBANOL 25" | 100/0 | 805 | 32.4 | 7.90 | 203 | -48 | immiscible (1) |
| Comparative C | "DOBANOL 25" | 50/50 | 800 | 34.3 | 7.45 | 193 | -12 | immiscible (2) |
| Comparative D | "DOBANOL 25" | 25/75 | 750 | 32.4 | 7.01 | 186 | -21 | immiscible (2) |

EP 0 386 851 B1

```
M.W. (GPC) is molecular weight by gel permeation
chromatography
*     miscibility for all concentrations of
hemi-ether.  Measurements were only made for the
temperature range -70°C to +100°C.
(1)   immiscible from 2% to 48%w hemi-ether
(2)   only small areas of miscibility
```

The above Table I shows that the hemi-ethers of Examples 1 to 8 are miscible with 1,1,1,2-tetrafluoroethane at all concentrations from -70°C to at least +65°C, by contrast with Comparative Examples A to D, and with the N-butyl polyoxyproplylene glycol hemi-ethers of Table B of Columns 8 and 9 of US Patent No. 4,755,316, which have stated viscosities at 37°C ranging from 62 to 114 centistokes ($mm^2/s$).

For a refrigeration lubricant e.g. for use in domestic and commercial refrigerator applications, it is clearly important that the lubricant and refrigerant components should be completely miscible under all possible operating conditions, in order to avoid possible system malfunctions due to phase separation.

## Claims

1. A refrigeration lubricant comprising a mixture of a hydrofluorocarbon and a polyoxyalkylene glycol hemi-ether of the formula

$$RO-[(EO)_m(PO)_n]-H \qquad (I)$$

wherein EO represents ethyleneoxy, PO represents propyleneoxy, R is $C_{1-6}$ alkyl, and m and n represent average numbers of ethyleneoxy and propyleneoxy moieties in each hemi-ether molecule such that $m/(m+n)$ is in the range 0 to 0.5 and $n/(m+n)$ is in the range 0.5 to 1 and the hemi-ether has viscosity at 40°C (DIN 51 562) in the range 10 to 46 $mm^2/s$.

2. A lubricant according to claim 1, wherein the molecular weight ($M_n$) of the hemi-ether is in the range 200 to 1000.

3. A lubricant according to claim 1 or claim 2, wherein the hydrofluorocarbon is a tetrafluoroethane.

4. A lubricant according to claim 3, wherein the hydrofluorocarbon is $CF_3CH_2F$.

5. A lubricant according to any one of Claims 1 to 4, wherein the viscosity is in the range 14 to 40 $mm^2/s$.

6. A lubricant according to any one of claims 1 to 5, wherein R is $C_{1-4}$ alkyl.

7. A lubricant according to any one of Claims 1 to 6, wherein $n/(m+n)$ is at least 0.75.

8. A lubricant according to claim 7, wherein m is 0.

9. A lubricant according to any one of Claims 1 to 8, wherein the viscosity is in the range 14 to 33 $mm^2/s$.

10. A process for the preparation of a refrigeration lubricant according to Claim 1 which comprises mixing a hydrofluorocarbon with a polyoxyalkylene glycol hemi-ether of formula I as defined in Claim 1.

## Patentansprüche

1. Ein Schmiermittel für Kühlapparate, umfassend eine Mischung eines Fluorkohlenwasserstoffs und eines Polyoxyalkylenglykol-Halbäthers der Formel

$$RO-[(EO)_m(PO)_n]-H \qquad (I)$$

in welcher EO Ethylenoxy, PO Propylenoxy, R eine $C_{1-6}$-Alkylgruppe, und m und n durchschnittliche Zahlen von Ethylenoxy und Propylenoxy in jedem Halbäthermolekül bedeuten, so daß m/(m+n) im Bereich von 0 bis 0,5 liegt und n/(m+n) im Bereich von 0,5 bis 1 liegt und der Halbäther eine Viskosität bei 40°C (DIN 51 562) im Bereich von 10 bis 46 mm$^2$/s aufweist.

2. Ein Schmiermittel nach Anspruch 1, in welchem das Molekulargewicht($M_n$) des Halbäthers im Bereich von 200 bis 1000 liegt.

3. Ein Schmiermittel nach Anspruch 1 oder 2, in welchem der Fluorkohlenwasserstoff ein Tetrafluorethan ist.

4. Ein Schmiermittel nach Anspruch 3, in welchem der Fluorkohlenwasserstoff $CF_3CH_2F$ ist.

5. Ein Schmiermittel nach einem der Ansprüche 1 bis 4, in welchem die Viskosität im Bereich von 14 bis 40 mm$^2$/s liegt.

6. Ein Schmiermittel nach einem der Ansprüche 1 bis 5, in welchem R ein $C_{1-4}$-Alkyl ist.

7. Ein Schmiermittel nach einem der Ansprüche 1 bis 6, in welchem n/(m+n) mindestens 0,75 beträgt.

8. Ein Schmiermittel nach Anspruch 7, in welchem m den Wert 0 hat.

9. Ein Schmiermittel nach einem der Ansprüche 1 bis 8, in welchem die Viskosität im Bereich von 14 bis 33 mm$^2$/s liegt.

10. Ein Verfahren zur Herstellung eines Schmiermittels für Kühlapparate nach Anspruch 1, welches das Mischen eines Fluorkohlenwasserstoffs mit einem Polyoxyalkylenglykol-Halbäther der Formel I, wie in Anspruch 1 definiert, umfaßt.


**Revendications**

1. Un lubrifiant de réfrigération comportant un mélange d'un hydrofluorocarbone et d'un hémi-éther de polyoxyalkylène glycol de formule

$$RO\text{-}[(EO)_m(PO)_n]\text{-}H \qquad (I)$$

dans laquelle EO représente un motif éthylèneoxy, PO représente un motif propylèneoxy, R est un radical alkyle en $C_1$ à $C_6$, et m et n représentent des nombres moyens des motifs éthylèneoxy et propylèneoxy dans chaque molécule hémi-éther de façon que m/(m+n) se situe dans la gamme de 0 à 0,5 et n/(m+n) se situe dans la gamme de 0,5 à 1, et que l'hémi-éther présente une viscosité à 40°C (DIN 51 562) dans la gamme de 10 à 46 mm$^2$/s.

2. Un lubrifiant selon la revendication 1, dans lequel le poids moléculaire ($M_n$) de l'hémi-éther se situe dans la gamme de 200 à 1000.

3. Un lubrifiant selon la revendication 1 ou la revendication 2, dans lequel l'hydrofluorocarbone est un tétrafluoroéthane.

4. Un lubrifiant selon la revendication 3, dans lequel l'hydrofluorocarbone est le $CF_3CH_2F$.

5. Un lubrifiant selon l'une quelconque des revendications 1 à 4, dans lequel la viscosité se situe dans la gamme de 14 à 40mm$^2$/s.

6. Un lubrifiant selon l'une quelconque des revendications 1 à 5, dans lequel R est un radical alkyle en $C_1$ à $C_4$.

7. Un lubrifiant selon l'une quelconque des revendications 1 à 6, dans lequel n/(m+n) est au moins 0,75.

8. Un lubrifiant selon la revendication 7, dans lequel m est O.

9. Un lubrifiant selon l'une quelconque des revendications 1 à 8, dans lequel la viscosité se situe dans la gamme de 14 à 33 mm$^2$/s.

**10.** Un procédé pour la préparation d'un lubrifiant de réfrigération selon la revendication 1, qui consiste à mélanger un hydrofluorocarbone avec un hémi-éther de polyoxalkylène glycol de formule I tel que défini dans la revendication 1.